# EUROPEAN PATENT SPECIFICATION

(11) **EP 1 419 996 B1**
(45) Date of publication and mention of the grant of the patent: **11.03.2009**
(21) Application number: 03256932.9
(22) Date of filing: 03.11.2003
(51) Int. Cl.: C02F 3/34

(54) **Nitrate nitrogen denitrifying treatment material and method of removing nitrate nitrogen**
Zusammensetzung zur Denitrifikation von Nitrat sowie Verfahren zur Entfernung von Nitrat
Composition pour la dénitrification de nitrate et procédé d'élimination de nitrate

(30) Priority: 05.11.2002 JP 2002321549; 25.11.2002 JP 2002341276
(43) Date of publication of application: 19.05.2004
(73) Proprietor: Nippon Steel Chemical Co., Ltd., Tokyo 141-0031 (JP)
(72) Inventor: Yamada, Katsuhiro, Nippon Steel Chem. Co Ltd., Kisarazu-shi, chiba 292-0836 (JP)
(74) Representative: Thomson, James B.

(56) References cited:
- EP-A- 1 129 996
- GB-A- 1 038 649
- PATENT ABSTRACTS OF JAPAN vol. 018, no. 525 (C-1257), 5 October 1994 (1994-10-05) & JP 06 182393 A (KURITA WATER IND LTD), 5 July 1994 (1994-07-05)
- ZHANG T C ET AL: "Sulfur:limestone autotrophic denitrification processes for treatment of nitrate-contaminated water: batch experiments" WATER RESEARCH, ELSEVIER SCIENCE PUBLISHERS, AMSTERDAM, NL, vol. 33, no. 3, February 1999 (1999-02), pages 599-608, XP004151575 ISSN: 0043-1354
- PATENT ABSTRACTS OF JAPAN vol. 2002, no. 08, 5 August 2002 (2002-08-05) & JP 2002 119278 A (TSUKISHIMA KIKAI CO LTD), 23 April 2002 (2002-04-23)

## Description

### Field of the Invention

The present invention relates to a nitrate nitrogen denitrifying treatment material of a sulfur-metal carbonate system for denitrifying the nitrate nitrogen in water by biological treatment by sulfur-oxidizing bacteria. The present invention also relates to a method for removing nitrate nitrogen in water by sulfur-oxidizing bacteria, an apparatus using the method, and a denitrifying treatment material therefor. More specifically, the present invention relates to a granular nitrate nitrogen denitrifying treatment material capable of removing nitrogen gas produced during treatment effectively, and is suitable especially for a fluidized bed system, and a method and apparatus for removing nitrate nitrogen using the same.

### Description of the Related Art

A nitrate nitrogen removing system using autotrophic sulfur-oxidizing denitrifying bacteria (hereinafter referred to as "sulfur-oxidizing bacteria") has attracted attention in various fields as a technology for removing nitrate nitrogen in waste water (such as domestic, industrial, livestock, rural, and piscicultural) which cause eutrophication of rivers, lakes, closed water areas, closed sea and so on because the system doesn't require a high maintenance cost as in methanol addition etc., unlike a system using heterotrophic denitrifying bacteria.

Various nitrate nitrogen removing systems using sulfur-oxidizing bacteria (hereinafter referred to as "denitrifying system") are proposed in, for example, EP 1129996 Al, JP 62-56798 B, JP 63-45274 B, JP 60-3876 B, JP 01-31958 B, JP 04-9199 B, JP 04-74598 A, JP 04-151000 A, JP 04-197498 A, and JP 06-182393 A.
Also, JP 2001-47086 A, and JP 2001-104993 A propose denitrifying systems in which sulfur-oxidizing bacteria are incorporated in a molten mixture of sulfur and limestone. These systems show excellent effects in terms of the ease of maintenance and the cost of denitrifying treatment.

In addition, JP 2002-66592 A proposes a method of producing a granulated denitrifying treatment material by mixing and pressing sulfur and limestone without heating, instead of steps of heat-fusion and quenching solidification. Since the method is applicable to not only batch type but also continuous molding, milling and classifying processes are not necessary, and productivity of a treatment material can be increased. However, in a granulating method achieved by pressing only, the binding force of powder to powder is weak, so each powder of sulfur and limestone exfoliates gradually and flows out of the surface during water treatment. Thus, there still remain problems such as a decrease of decomposing ability and recruital of a treatment material.

However, for the above method for integration of sulfur and limestone by heat-fusion, in order to avoid re-solidification of dissolved sulfur in a heat-kneading machine, it is necessary to add a powdered limestone and other additives to be mixed gradually or to preheat powdered rawmaterials other than sulfur. In addition, the method involves troubles in cooling, crushing, and classifying in the end, which may cause a problem of productivity. Further, the surface of a treatment material producedby heat-fusion of sulfur is too smooth and easily releases sulfur-oxidizing bacteria due to water flow or vibration so that the surface may not be a proper culture medium for bacteria.

Furthermore, although quenching with tap water or well water is convenient and low-cost, after the quenching, moderate crushing and classifying are necessary for use and these steps have some problems in yield because of a large amount of produced powder. Additionally, since a denitrifying treatment material produced by the method has a high true specific gravity of about 2 to 2.5 and a high bulk specific gravity of about 1.1 to 1.4, the material tends to precipitate in treated water.

As for a method and apparatus for removing nitrate nitrogen in water using such a treatment material, it is a common process that a treatment material is fixed as a packed layer to allow waste watertoflowinthelayer. However, theprocessmayhavealimitation in a contact area or a problem of covering the surface of the treatment material with nitrogen gas generated.

Unless stirring is performed mechanically, nitrogen gas generated during treatment is accumulated, and contact of water containing nitrate nitrogen (which means nitrogen in nitric acid, nitrous acid, or salts or ions thereof) with a denitrifying treatment material is inhibited, and thus denitrifying ability is often lowered. As a method for effective desorption of nitrogen gas accumulated in a denitrifying treatment material, a fluidized-bed system is conceivable. The treatment material is, however, not applicable to a fluidized-bed, because the material has too high a specific gravity to suspend in water. Also, a treatment material obtained by a fusion method has a smooth surface and thus a small specific surface area, which is not necessarily a suitable condition for bacteria growth or activation.

### SUMMARY OF THE INVENTION

Therefore, an object of the present invention is to provide a relatively strong nitrate nitrogen denitrifyingtreatment material that enables continuous granulation, is suitable for growth and does not readily separate from the bacteria, and is superior in denitrifying ability.
Another object of the present invention is to provide a granular nitrate nitrogen denitrifying treatment material that can be granulated in a simple manner without steps of heat-fusion and quenching solidification, that does not flow out during water treatment by release of powder etc, that further provides a good condition for bacteria growth or activation, and that is applicable to a fluidized-bed.
Still another object of the present invention is to provide a water treatment material that can remove easily and simultaneously not only nitrate nitrogen but also phosphorus which are causative agents of environmental pollution.

As a result of extensive investigations to solve the above-mentioned problems, the inventors of the present invention have found that the above-mentioned objects are achieved by additionally mixing a water insoluble organic binder in a sulfur-metal carbonate system instead of using only sulfur as a binder, and have accomplished the present invention.

The present invention relates to a nitrate nitrogen denitrifying treatment material used for denitrifying nitrate nitrogen by biological treatment by means of sulfur-oxidizing bacteria, characterized in that said material is a granulated product having a particle size from 1 to 100 mm, and comprises a metal carbonate powder and a sulphur powder, which are mixed with 0.1 to 30 parts by weight of a water insoluble organic binder for integrating the powders with respect to 100 parts by weight of total of both the powders, said metal carbonate powder present in 30 to 70 parts by weight of the total weight of metal carbonate powder and sulphur powder, and said sulphur powder present in 70 to 30 parts by weight of the total weight of the metal carbonate powder and sulphur powder. This nitrate nitrogen denitrifying treatment material is manufactured by mixing the metal carbonate powder and the sulfur powder with an organic binder solution which offers a water insoluble or hardly-soluble organic binder, kneading the mixture uniformly, and then removing liquid.

In one embodiment, the nitrate nitrogen denitrifying treatment material of the invention uses a sulfur-carbonate system substrate, including a granule integrated with an organic polymeric binder which has a bulk specific gravity of 0.2 to 0.7. It is preferable that the nitrate nitrogen denitrifying treatment material contain 0.1 to 20% by weight of the organic polymeric binder, 20 to 50% by weight of metal carbonate, 20 to 50% by weight of sulfur, and 5 to 65% by weight of at least one selected from the group consisting of a fibrous substance and a microporous substance.

Further, the present invention relates to a method of removing nitrate nitrogen in water, characterized in that it comprises performing a denitrifying treatment by contacting a nitrate nitrogen denitrifying treatment material of the invention with water.

Still further, the present invention relates to an apparatus for removing nitrate nitrogen in water, characterized by including a treatment tank which is equipped with a unit for fluidizing or suspending a nitrate nitrogen denitrifying treatment material in water, said tank comprising a nitrate nitrogen denitrifying treatment material of the invention, a unit for introducing waste water containing nitrate nitrogen, and a unit for draining treated waste water.

A nitrate nitrogen denitrifying treatment material (hereinafter referred to as a denitrifying treatment material or water treatment material) of the present invention contains, for essential components, a metal carbonate powder (hereinafter referred to also as carbonate), a sulfur powder (hereinafter referred also to as sulfur), and a water insoluble or hardly-soluble organic binder, and may contain a carrier supporting these essential components or an inorganic additive being added thereto if necessary. An example of the organic binder is an organic polymeric binder. Examples of the carrier supporting those essential components or the inorganic additive being added thereto if necessary include a fibrous substance and a microporous substance.

Although carbonate and sulfur are referred to as a substrate, because these are sources of nutrient for sulfur-oxidizing bacteria, there may be the case in which a part of the fibrous substance or the microporous substance are nutritious. Carbonate and sulfur are used in powder form.

The metal carbonate is a source of carbon for sulfur-oxidizing bacteria, and examples thereof include: a carbonate of an alkaline earth metal such as calcium or magnesium; a carbonate or bicarbonate of an alkaline metal such as sodium, potassium, or lithium; and a mixture thereof. Of those, calcium carbonate exists abundantly as limestone throughout nature and has moderate water insolubility, and thus is especially useful in terms of a lifetime of a treatment material.
The particle diameter of this carbonate powder is not particularly limited, but is preferably about a few µm to hundreds of µm. In view of the fact that a microorganism consumes sulfur and carbonate, a smaller particle diameter is more preferable to expand a contact area, but too small particle diameter is hard to handle, and a quantity of binder required for adhesion also becomes larger. Therefore, the above-mentioned range is preferable.

Examples of sulfur include recovered sulfur from a desulfurizing plant of oil or coal and natural sulfur but not particularly limited thereto.
Aparticle diameter of a sulfur powder is also preferably about a few µm to hundreds of µm, for the same reason as that for the particle diameter of the carbonate powder.

In the conventional method, when integrating such a sulfur powder and a carbonate powder, fused sulfur has been utilized as a binder. However, in the present invention, an organic binder is used aside from this. The organic binder must be necessarily water insoluble or hardly-soluble in order to bind those powders and to treat nitrate nitrogen in water such as lakes.

As a binder, a ceramic adhesive such as alumina or zirconia or an inorganic binder such as cement or gypsum may be used. However, because of their specific gravities higher than those of sulfur and carbonate, the adhesive and the binder have to be added by a large amount, which is disadvantageous in binding powder with powder or various carriers. In contrast, an organic binder has advantages in that the organic binder is added by a smaller amount as the organic binder has a smaller specific gravity than that of an inorganic binder, can be granulated uniformly, and has high adhesive property.

Examples of the organic binder used in the present invention include a thermoplastic resin, a thermosetting resin, and an organic polymeric binder such as a natural polymer. In the case of an organic binder that acts as a binder accompanied with a hardening reaction and so on like a thermosetting resin, such an organic binder may be water insoluble or hardly-soluble after the hardening reaction and so on. In the case of a binder that acts as a binder after solvent evaporation or quenching solidification like a thermoplastic resin, such binder may be water insoluble or hardly-soluble before or after the solvent evaporation or quenching solidification.

Upon granulation of a powder such as sulfur or limestone, a fibrous substance, and the like using an organic polymeric binder, since there is no need for heat-fusion or hardening by heat, light, ultraviolet, or electron rays of a resin or polymer, using an organic polymer dispersed in water or an organic solvent is convenient and advantageous for uniform granulation and a high adhesive strength. That is, as the state of an organic polymer used in granulation, a dispersion dispersed in water and a solution dispersed or dissolved in a solvent are preferable.

Examples of the polymers dispersed in water include: styrene, acrylic, epoxy, urethane, and vinyl chloride emulsions; natural rubber latexes; synthetic rubber latexes such as chloroprene rubber and styrene-butadiene rubber latexes; and bituminous emulsions such as asphalt and parrafin. Further, examples of the organic polymers dissolved in organic solvents include: amorphous thermoplastic resins such as a styrene resin, an acrylic resin, and a polycarbonate resin; thermosetting resins that have not set such as an epoxy resin and a urethane resin; and natural polymers such as asphalt and natural rubber.

Examples of the organic solvents include, but are not limited to, an aromatic solvent such as toluene, ketone and ester solvents such as acetone and ethyl acetate, a hydrocarbon solvent such as petroleum ether, and a natural solvent such as limonene.

A denitrifying treatment material in the present invention is preferably a granulated product of a carbonate powder and a sulfur powder which are integrated with an organic binder. A particle is effective in expanding a contact area of a microorganism (bacterium) inhabiting on a treatment material with a treatment liquid. The size of the particle is, for example, 1 to 100 mm, preferably 2 to 50 mm. On the other hand, a smaller powder than the above particle has a larger contact area and a higher denitrifying effect, but is harder to handle for practical use and easier to release in using.

As long as a carbonate powder and a sulfur powder exist on a carrier surface uniformly even if the powders are not shaped into a particle, denitrifying proceeds, and thus, a carrier that supports a carbonate powder and a sulfur powder on its surface is also preferable. The size of a denitrifying treatment material in this case is, for example, 1 to 100 mm, preferably 2 to 50 mm. By using a carrier, there are effects of not only reduction of the amounts of a carbonate powder and a sulfur powder used but also expansion of the surface area by increasing complexity of shape.

The carrier is not particularly limited as long as the carrier supports a sulfur powder and a carbonate powder by an organic binder on the carrier surface. Accordingly, as a carrier, there are a relatively small carrier which can be kneaded with a sulfur powder and the like at the same and a relatively large carrier which cannot be kneaded with a sulfur powder and the like at the same so that it is coated with slurry of the sulfur powder and the like. Any of these carriers can be used. In the view of the diameter, a uniform particle under 5 mm in powder form (granular or fibrous) is referred to as a small carrier, and a molded product or a crude crushed product thereof over 5 mm is referred to as a large carrier. The small carrier may be a particle or a fiber. The large carrier may be a processed matter of the small carrier or a crushed product thereof.

When using a carrier of large particle diameter, the carrier can be coated with a sulfur powder and a carbonate powder to be made into a denitrifying treatment material which supports these powders on the carrier surface. Preferred examples of the coating method include a method in which a carrier is adhered or coated with a solution or slurry containing a sulfur powder, a carbonate powder, and an organic binder, and the whole is dried or cooled. Examples of the carrier include: woven fabrics or non-woven fabrics, or molded products of various fibers; molded products of minerals, polymeric materials, timber, charcoal, metal, and ceramic; pumice stone; and organisms such as shells, bones, and corals, although not particularly limited thereto.

When using a carrier of a small particle diameter, the carrier can be mixed uniformly with a sulfur powder and a carbonate powder and integrated with an organic binder to be made into a denitrifying treatment material. In this case, it is possible to form a certain shape. Examples of the small carrier particles include a variety of mineral particles such as sand, coral sand, pearlite, water granulated slag, zeolite, diatomaceous earth, fly ash, Shirasu-balloon, and mica. Examples of the fibers include: natural mineral fibers such as wollastnite, sepiolite, and asbestos; man-made mineral fibers such as rock wool, glass wool, ceramic fiber, and carbon fiber; and organic fibers such as cellulose, nylon, polypropylene, and polyethylene, although not limited thereto.

When referring to a carrier in the present invention, if the carrier is a carrier of a small particle diameter, usually the carrier accounts for over 50% of total. It is possible to use several carriers, and in this case, the sum of carriers is referred in the above calculation. In addition, although a component added in an amount under 50 v% is usually referred to as an additive, the additive is not necessarily clearly distinguished from a small carrier. Further, in the present invention, a specific gravity of a denitrifying treatment material can be reduced by mixing a fibrous substance or a microporous substance. A fibrous substance or a microporous substance used for this purpose is contained in a range from 5 to 65 wt%. In this case, the fibrous substance or the microporous substance may also be referred to as a kind of additive or carrier.

A bulk specific gravity of a granular denitrifying treatment material produced is preferably 0.2 to 0.7. It is advantageous that a true specific gravity be adjusted to a value in which a treatment material is usually sedimented in water, but once nitrogen gas attaches to the surface of the treatment material over a certain amount as a denitrifying treatment progresses, the treatment material begins to rise up. Such an adjustment can be made easily with a simple experiment. If a bulk specific gravity is in the above range, the denitrifying treatment material once having risen up is suspended relatively stably in water and then begins to sediment slowly. However, if nitrogen gas leaves a denitrifying treatment material during rising up, the denitrifying treatment material automatically sediments. A true specific gravity is preferably not less than 1.1 and preferably less than 2.0, but there may be a true specific gravity beyond this range depending on a bulk specific gravity.

Even when gas does not attach to the surface of a treatment material, if there is an upward flow or the like, the treatment material readily rises up and is fluidized, is also suspended relatively stably in water, and if an upward flow dies down or weakens, the treatment material automatically sediments slowly. A treatment material is easy to be fluidized by water flow of a fluidized bed, or the like. During fluidization, nitrogen gas leaves the treatment material, and the denitrifying reaction progresses. If a bulk specific gravity is less than 0.2, a treatment material tends to float on the water surface during a water treatment although easily fluidized even by a weak water flow. In that case, a microorganism utilizes not nitrate nitrogen in water but oxygen on the water surface for easier respiration, and thus denitrifying performance is lowered. Further, when a drain is set at an upper part, there is a risk of flowing out of the treatment material with drained water. If a bulk specific gravity is more than 0.7, a treatment material becomes heavier and hardly rises up even by a strong water flow and fluidity is lowered. Accordingly, it is difficult for nitrogen gas produced to leave, and denitrifying reactivity is lowered. Obviously, the treatment material is inadequate to a fluidization or suspension reaction.

To adjust a specific gravity, a bulky material or a lightweight material is used. These are preferably in powder form or fiber, but these may be of a relatively large form appropriate to support a substrate.

It is also preferable that the denitrifying treatment material of the present invention contain 1 to 100 parts by weight of an inorganic additive with respect to 100 parts by weight of a total of sulfur and metal carbonate. The treatment material is preferably produced by integrating a carbonate powder, a sulfur powder, and an inorganic additive with an organic binder and granulating the integrated product. A diameter of a particle is, for example, 1 to 100 mm, preferably 2 to 50 mm.

As such an inorganic additive, there is a component similar to the above-described small carrier. But if the inorganic additive acts as a carrier, the component is not included. In addition, if necessary, flame retardants such as aluminium hydroxide and magnesium hydroxide or hydrogen sulfide generation inhibitors such as iron oxide may be added.

For a content of each component in the denitrifying treatment material of the present invention, first, the content of an organic binder is 0.1 to 30% by weight, preferably 0.1 to 20% by weight. If the content is less than 0.1%, the organic binder cannot bind a powder such as sulfur or carbonate (e.g. limestone) strongly, and thus the powder may be released and lost during a denitrifying treatment. On the other hand, if the content is more than 30%, the organic binder can bind a powder such as sulfur or carbonate (e.g. limestone) strongly, but the powder necessary for denitrifying is covered with organic polymer and thus cannot be effectively utilized, and also, a void within a particle is reduced, which cannot enhance an activity of a microorganism. When not using a carrier or an additive, contents of sulfur, carbonate, and the organic binder are defined within the above range.

When using a carrier, an amount of the carrier varies according to a method of using a treatment material (for example, only dipping into treated water, sousing treated water, a fluidized-bed type, a circulation system and so on), ability, and a shape, volume, and weight of the carrier. That is, compared with the carrier, if there is a very little amount of sulfur powder or the like (e.g. a membrane level), a treatment rate is very high by virtue of an enormous contact area, although lifetime is short because the loss of the membrane causes the loss of the effect. Therefore, in the case of weighing the lifetime, the amount of sulfur powder or the like should be more than that of carrier, and in the case of increasing the treatment rate, the amount of sulfur powder or the like should be less than that of carrier.

Specific examples of the powder and fibers include a variety of mineral particles such as sand, coral sand, pearlite, water granulated slag, zeolite, diatomaceous earth, fly ash, Shirasu-balloon, mica, and glass foams. Examples of the fibers include: natural mineral fibers such as wollastnite, sepiolite, and asbestos; man-made mineral fibers such as rock wool, glass wool, ceramic fiber, and carbon fiber; and organic fibers such as cellulose, nylon, polypropylene, and polyethylene, although not limited thereto.
Specific examples of the relatively large forms include: woven fabrics, non-woven fabrics, or molded products of various fibers; molded products of minerals, polymeric materials, timber, charcoal, metal, and ceramic; and organisms such as shells, bones, and corals, although not specifically limited thereto.

Next, addition of a fibrous substance can improve a denitrifying treatment ability, because a mesh of fiber having a large void within a treatment material can activate microorganism growth, and the fibrous substance can serve not only to reinforce the treatment material to be granulated but also to expand a specific surface area owing to its fibrous form. Additionally, by using a fiber in addition to an organic polymer as a binder, an apparent specific gravity of a treatment material is reduced and the treatment material can be used effectively to a fluidization or suspension reaction. Examples of the fiber used include the above-mentioned fibers. However, since sulfur-oxidizing bacteria each have a size of about 1 µm, a diameter of a fiber used is preferably over 1 µm. Among various fibers, as rock wool and carbon fiber have a wide range of fiber diameters of 3 to 10 µm and fiber lengths of several tens of µm to several mm, these provide a satisfactory environment for microorganism growth and additionally have a reinforcing effect. Further, rock wool, bases of which are calcium oxide, silica, and alumina, is compatible with calcium carbonate and sulfur which are main ingredients of a treatment material. Still further, a specific gravity of rock wool is about 2.5, which is nearly equivalent to that of calcium carbonate or sulfur, and thus kneading property is good. Furthermore, considering an environmental load, safety in organism, cost, and so on, rock wool is also especially preferable.

Next, by adding amicroporous substance, nitrogen gas generated during treatment can be readily removed. Because a specific gravity of the treatment material can be reduced, the treatment material can be easily shaken or fluidized even by a weak water flow. Accordingly, the decomposing ability can also be improved. Further, as amicropore of themicroporous substance has an effect of activation of microorganism growth just like a mesh of fiber, the decomposing ability is improved more. Examples of the microporous substances include pearlite,Shirasu-balloon,glassfoams,diatomaceousearth, sepiolite, pumicite, clay, and iron ore slug. Of those, pearlite, Shirasu-balloon, and glass foams, which have particularly small specific gravities and are easily available, are especially useful. In the view of the property of reducing a specific gravity, microorganism growth, and tractability in manufacturing, their particle sizes are preferably about 100 µm to 10mm.

For a content of each component in the treatment material, the content of a polymeric binder is preferably 0.1 to 20% by weight. Alternatively, the content of a polymeric binder is preferably 0.1 to 30 parts by weight with respect to 100 parts by weight of a total of sulfur and metal carbonate. If the content is less than 0.1%, the polymeric binder cannot bind a powder such as sulfur or carbonate (e.g. limestone) strongly, and thus the powder may be released and lost during a denitrifying treatment. On the other hand, if the content is over the upper limit, the polymeric binder can bind a powder such as sulfur or carbonate (e.g. limestone) strongly, but the powder necessary for denitrifying is covered with organic polymer and thus cannotbe effectivelyutilized, making it possible to enhance the activity of a microorganism.

Since denitrifying performance is reduced by both too much and too little amounts of sulfur and metal carbonate, the amounts of sulfur and metal carbonate are preferably 20 to 50% by weight. Although there is no limitation on the proportion of sulfur to metal carbonate, the amount of metal carbonate is preferably 50 to 200 parts by weight with respect to 100 parts by weight of sulfur. Alternatively, the amount of metal carbonate is preferably 30 to 70 parts by weight with respect to 30 to 70 parts by weight of sulfur.

A percentage of sulfur and metal carbonate in the case of using a fibrous substance or a microporous substance is preferably 5 to 65% by weight in total. If the percentage is less than 5%, effects of reinforcement and reduction of specific gravity by a fibrous substance and the effect of reduction of specific gravity by a microporous substance are little displayed. Moreover, an effect on bacteria growth is small. If the percentage is over 65%, as contents of sulfur and carbonate necessary to denitrifying are reduced, it is disadvantageous for a long lifetime of denitrifying performance. Accordingly, the percentage is more preferably 20 to 50%.

It is preferable that a denitrifying treatment material obtained by mixing the above materials has a rugged surface on which a sulfur powder and a carbonate powder exist uniformly as aggregations of particles microscopically and has considerable voids within the particle. This will enable the denitrifying treatment material to have a high specific surface area, to be suitable for microorganism growth, and not to be released easily by shock exerted by a water flow, or vibration, or the like.

Further, a denitrifying treatment material preferably also comprises iron oxide in order to scavenge hydrogen sulfide, which is produced due to lack of nitrate nitrogen in treatment liquid. The iron oxide added preferably has a specific surface area of 0.1 to 300 m²/g for ease of manufacturing and a hydrogen sulfide scavenging effect. Examples of iron oxide include FeO, Fe₂O_{3,} Fe₃O_{4,} and FeOOH (hydrated iron oxide). Although any of the iron oxides have the hydrogen sulfide scavenging effect, hydrated iron hydroxide such as naturally-produced loess, which has a specific surface area of about 20 to 70 m²/g and contains an organic component, has not only the hydrogen sulfide scavenging effect but also an effect of remarkably enhancing the denitrifying treatment ability. Because of its easyavailability, addition of loess is especiallypreferable.

A method of producing the nitrate nitrogen denitrifying treatment material of the present invention includes: mixing a carbonate powder and a sulfur powder, and if necessary a fibrous substance, a microporous substance, an inorganic additive, and the like, with an organic binder which is dispersed or dissolved in liquid such as water, or an organic solvent; kneading the mixture uniformly; and drying the kneaded product. In this method, it is preferable to perform granulation after kneading to obtain a particle of a given diameter.

By loading a container for producing a denitrifying treatment material with a given amount of a binder dispersed in water or an organic solvent, a given amount of sulfur, and a given amount of carbonate, and if any, a fibrous substance or microporous substance, an inorganic additive and so on, and then kneading and granulating the mixture uniformly by a method using a known apparatus such as a homogenizer, a kneader, a banbury mixer and a ribbon mixer, and even a fluid bed granulator and a kneading extrusion machine, and then removing water and/or the organic solvent with a dryer or a blower or by air drying, a denitrifying treatment material of granular or any shape can be produced.

The denitrifying treatment material of the present invention is a granulated product having a particle size from 1 to 100 mm. In this case, the particles obtained may be uniform in size and shape or may be of an undefined shape and have a size distribution but the average diameter is preferably within a range of 1 to 50 mm. The granulation may be done by using a well known kneading extrusion machine such as a continuous extruder before removing water or an organic solvent, or may be done by performing granulation after removing water or an organic solvent to obtain particles of an appropriate size. The method of removing water or an organic solvent may be a well known method such as air drying, high-temperature drying, or vacuum drying.

Although the hardening or adhering action of an organic binder is enhanced by drying, heating and so on, it is preferable for the hardening to occur gradually without heating or the like. For example, a liquid epoxy resin can be cured without applying a high temperature by mixing a base resin with a curing agent, and the cured resin has a strength sufficient for use in the present invention. A thermoplastic resin, which is in a solid state at room temperature, may be emulsified in water or dissolved in an organic solvent, and such a thermoplastic resin can be cured by removal of water or the solvent. Considering that the sulfur powder is flammable, heating should be avoided.

Further, the method of coating a sulfur powder and a carbonate powder on a carrier surface may include: coating or spraying slurry prepared by mixing the sulfur powder, the carbonate powder, and an organic polymer at the same time; and then removing water or an organic solvent. An alternative method of coating may include: coating a carrier which is pre-impregnated or pre-wetted with dispersion or a solution containing an organic polymer with the sulfur powder and the carbonate powder; and then removing water or organic solvent, but the method is not limited thereto. The method of removing water or an organic solvent may, as with the case of granulation, be a well known method such as air drying, high-temperature drying, or vacuum drying.

Considering the case of integrating (adhering) a sulfur powder and the like with an organic binder and the case of further integrating a carrier, when using a relatively small carrier, the carrier can support sulfur and the like on the carrier surface by being simultaneously kneaded together with a sulfur powder and the like. When using a relatively large carrier, the carrier cannot support sulfur and the like at once. Accordingly, it is preferred that a sulfur powder and the like be slurried at first, and then a carrier be coated with this slurry.

For a method of removing nitrate nitrogen using the denitrifying treatment material of the present invention, methods of using the denitrifying treatment material such as those disclosed in the above-mentioned publications are adoptable, but a method of fluidizing or suspending a denitrifying treatment material is preferable for the denitrifying treatment. In other words, preferred is a method of fluidizing or suspending at least a part of a denitrifying treatment material without fixing the denitrifying treatment material to a denitrifying treatment tank (hereinafter referred to as a fluidized-bed method). In this case, it is preferable that a denitrifying treatment material do not surface and most of the material be suspended or fluidized in a lower part of the treatment tank.

Further, in the case of a nitrate nitrogen denitrifying treatment material in which a carbonate powder and a sulfur powder are supported on a surface of a carrier, preferably a planar carrier such as non-woven fabric with an organic polymeric binder, a denitrifying treatment can be done by arranging the material interspatially at given intervals in a treatment tank by hanging, supporting, leaning and so on, and circulating a treated water in the treatment tank. In this case, the treated water can be circulated by injection of water flow or air flow into the treatment tank, mechanical stirring or vibration (using a tool such as a magnetic stirrer, a stirring blade, or a vibrator), or decompression (aspiration to vacuum) . Hereinafter, such a denitrifying treatment method is also referred to as a fixed type denitrifying treatment method.

According to such a fixed type denitrifying treatment method, as the treatment material is arranged interspatially in the treatment tank, gas (nitrogen gas) produced by a denitrifying reaction is easily vented of f without being stalled around the treatment material. Further, this interspatial arrangement system is free from a concern typically encountered by a conventional system in which many granular treatment materials are stacked. That is, with the above conventional system, when denitrifying treated water by passing the water through the stack of treatment materials, after a certain period, a so-called water way is formed and thus the stacked granular treatment materials do not work effectively as denitrifying treatment materials as a whole. However, as too large an interspatial distance results in inefficiency owing to a decrease of a contact area with a treatment material, an interspatial distance between adjacent treatment materials (e.g., 0.5 to 10 mm thick) each having a carrier is, for example, 5 to 200 mm, preferably 10 to 100 mm. The size (width/length) of such a treatment material having a carrier is determined according to a size and decomposing ability of a treatment apparatus.

Examples of an apparatus suitable for performing denitrifying treatment by the fluidized-bed method in which a denitrifying treatment material is fluidized or suspended include an apparatus having a treatment tank which is equipped with a unit that fluidizes or suspends a denitrifying treatment material in water, a unit that introduces waste water containing nitrate nitrogen, and a unit that drains treatedwastewater. Here, examples of the unit that fluidizes or suspends preferably include: 1) a unit that injects a water flow or an air flow which causes an upward flow into the treatment tank; 2) a unit that stirs or vibrates water in the treatment tank; 3) a unit that circulates a denitrifying treatment material in the treatment tank with water; and 4) a unit that decompresses the inside of the treatment tank (by decompressing, when nitrogen gas produced on and attached to the surface of the denitrifying treatment material is lifted upward and removed, the denitrifying treatment material is fluidized or suspended in water at the same time) . These units may be used as a combination of multiples of them, and may be either sequential or intermittent.

When denitrifying nitrate nitrogen in waste water by using the denitrifying treatment material of the present invention, if the waste water contains phosphorus such as phosphatic phosphorus (phosphoric ion, phosphorous ion, or the like) , phosphorus can also be removed by the denitrifying treatment material at the same time. Removal of such phosphorus is performed in a similar way to that in the denitrifying treatment.

### BRIEF DESCRIPTION OF THE DRAWINGS

In the accompanying drawings:
Fig. 1 is a schematic view of an apparatus used in the present invention;
Fig. 2 is a schematic view of another apparatus used in the present invention;
Fig. 3 is a schematic view of another apparatus used in the present invention;
Fig. 4 is a schematic view of another apparatus used in the present invention;
Fig. 5 is a schematic view of another apparatus used in the present invention;
Fig. 6 is a schematic view of another apparatus used in the present invention; and
Fig. 7 is a schematic view of another apparatus used in the present invention.

### DETAILED DESCRIPTION OF THE PREFFERED EMBODIMENTS

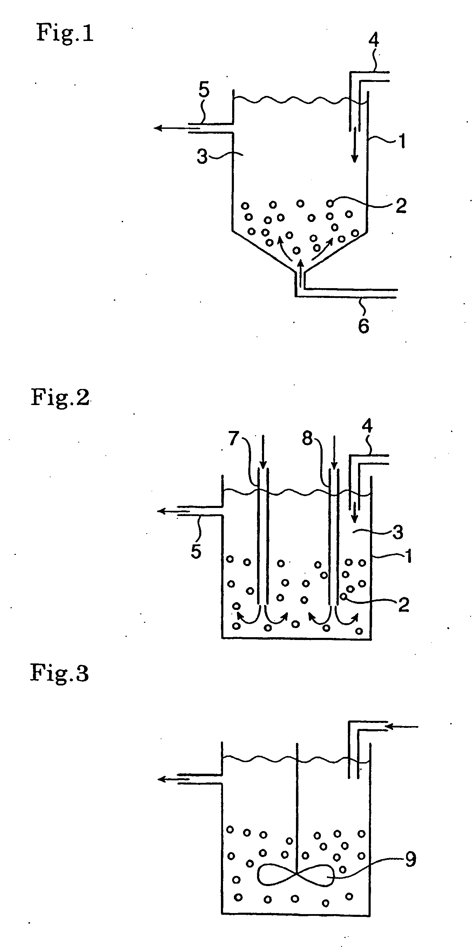

A specific example of an apparatus, which is preferable for removing nitrate nitrogen, is described with reference to Figs. 1 to 7 showing the schematic view thereof.
A treatment tank 1 is charged with a denitrifying treatment material 2 and wastewater 3 containing nitrate nitrogen to be treated, and is equipped with a unit that fluidizes or suspends the denitrifying treatment material 2 in water, a feed pipe 4 as a unit that introduces the waste water 3, and a drain pipe 5 as a unit that draws treated waste water. The denitrifying treatment material 2 is deposited in water in a static state, and is fluidized or suspended in a state that water adjacent to the denitrifying treatment material 2 is fluidized. The waste water 3 is introduced to the treatment tank 1 from the feed pipe 4, is stagnated in the treatment tank 1 for a necessary time, is denitrifyed by the denitrifying treatment material 2 and sulfur-oxidizing bacteria inhabiting therein, and is then drained through the drain pipe 5 as treated waste water having a reduced nitrate nitrogen concentration under a criterion level. In this apparatus, the denitrifying treatment material 2 is fluidized or suspended. Thus, the apparatus can establish good contact between the material and the waste water and can increase a denitrifying treatment rate.

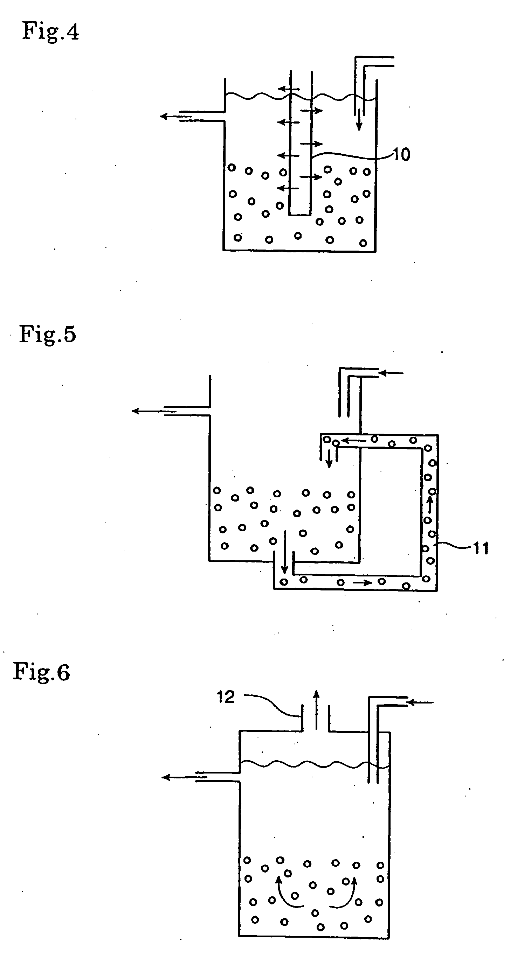

In the example of Fig. 1, a pipe 6 to introduce water or gas is attached to the bottom of the treatment tank 1, and by the water or gas introduced through the pipe, the denitrifying treatment material 2 is fluidized or suspended. In the example of Fig. 2, pipes 7 and 8 to introduce water or gas enter from the top of the treatment tank 1 and reach the bottom, and by'the water or gas introduced through the pipes, the denitrifying treatment material 2 is fluidized or suspended. In the example of Fig. 3, a stirrer 9 is attached to the inner bottom of the treatment tank 1, and by stirring of this, water surrounding the denitrifying treatment material 2 is fluidized and thus the denitrifying treatment material 2 is fluidized or suspended. In the example of Fig. 4, a vibrator 10 reaches the inner bottom of the treatment tank 1, and by a vibration of this, water surrounding the denitrifying treatment material 2 is fluidized and thus the denitrifying treatment material 2 is fluidized or suspended. In the example of Fig. 5, a circulating pipe 11 connecting the top and bottom of the treatment tank 1 is attached to the tank and the pipe 11 circulates the denitrifying treatment material 2 aspirated from the bottom to the top of the treatment tank 1. By this action, the denitrifying treatment material 2 is fluidized or suspended. In the example of Fig. 6, a vacuum line 12 is attached on the top of the treatment tank 1. As a result, the inner part of the treatment tank is decompressed, the denitrifying treatment material 2 lightened by adhesion of nitrogen gas is facilitated in rising up, and then the denitrifying treatment material 2 is fluidized or suspended.

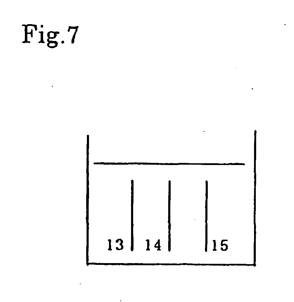

The example of Fig. 7 illustrates an example of the above-mentioned fixed type denitrifying treatment method, in which planar denitrifying treatment materials 13, 14, and 15 are arranged at given intervals in the treatment tank. The number of the planar denitrifying treatment materials is determined by the size of the treatment tank. In Fig. 7, those materials are hung with threads (not shown). Further, in the treatment tank, by a unit that is not shown, waste water is fluidized or the denitrifying treatment material is moved. As a unit that fluidizes waste water, it is convenient to flow continuously the waste water from a feed pipe to a drain pipe in such a manner that the waste water contacts the treatment material, but a unit that fluidizes the waste water like those described in the above Figs. 1 to 5 is also effective. As a unit that moves the denitrifying treatment material, a method using a vibrator, or the unit described in fig. 6 is also effective.

### Examples

A nitrate nitrogen denitrifying treatment material was made up from, in recipes shown in tables, sulfur (200 mesh, manufactured by Karuizawa Seiren); calcium carbonate (T-200, manufactured by Nitchitsu Co., Ltd.); a carrier; a fibrous substance or a microporous substance: non-woven fabric (PET fiber, manufactured by Toa Boshoku), rock wool (granulated wool of S-Fiber, manufactured by Nippon Steel Chemical Co., Ltd.), water granulated slag (mean particle diameter 1mm, manufactured by Nippon Steel Chemical Co., Ltd.), carbon fiber (Eskainos milled fiber, manufactured by Nippon Graphite Fiber Corp.), pearlite (mean particle diameter 0.6mm, manufactured by Mitsui Mining & Smelting Co., Ltd.); iron oxide compound: loess (specific surface area 40 m²/g, manufactured by Nippon Limonite Kogyo) ; and an organic binder: a polystyrene resin, a urethane resin.
A combined amount of the organic binder is numerically indicated as a solid content. For the polystyrene resin as an organic binder, a 5% solution or a 10% solution of high-impact polystyrene (product name: XL4), manufactured by Toyo-Styrene Co., Ltd., diluted in toluene was used. For the urethane resin as a thermosetting resin, a water-dispersing urethane resin (product name: 1980NS), manufactured by Dainippon Ink and Chemicals Incorporated, adjusted to 2 to 20% of resin content was used.

### Examples 1 and 2

In a 1000 ml glass beaker, predefined amounts of sulfur powder and calcium carbonate powder were mixed well. An organic binder adjusted to a predefined concentration by water or toluene was added to the mixture. The content in the beaker was stirred and mixed uniformly with a metal spatula to thoroughly dampen the entire mixed powder. The beaker was allowed to stand for 24 hours in a thermostat at 60°C to remove the water or the organic solvent completely. A mass of solidified treatment material was hammered lightly with a mallet to give a fractured product. For denitrifying treatment, a granular treatment material with a particle diameter of 5 to 20 mm was used.

### Example 3

As a carrier, non-woven fabric was used. First, an entire carrier was thoroughly dampened with a predefined amount of organic binder adjusted to a predefined concentration by water. Second, powder mixture of a predefined amount of sulfur and a predefined amount of calcium carbonate was applied uniformly to the surface of the non-woven fabric carrier with a metal spatula. An amount of coating was 6 g by dry weight per 100 cm² of the non-woven fabric. The non-woven fabric was allowed to stand for 24 hours in a thermostat at 60°C to remove the water completely.

### Examples 4 to 8

As a carrier, fiber or slag was used. In a container, a fiber or slag carrier was placed. An organic binder adjusted to a predefined concentration by water or toluene was added to the carrier in an amount such that the carrier was thoroughly dampened. Amixture of a predefined amount of sulfur and a predefined amount of calcium carbonate was added to the carrier. The content in the container was stirred and mixed uniformly with a metal spatula. The container was allowed to stand for 24 hours in a thermostat at 60°C to remove the water or the organic solvent completely. A mass of solidified treatment material was hammered lightly with a mallet to give a fractured product. For denitrifying treatment, a granular treatment material with a particle diameter of 5 to 20 mm was used.

### Comparative Examples 1 to 3

Treatment materials were prepared in the same way as in Example 1, except using no organic binder (Comparative Example 1) , deficient organic binder (Comparative Example 2), or excess organic binder (Comparative Example 3), respectively.

### Comparative Examples 4 to 7

Treatment materials were prepared in the same way as in Examples 4 to 8, except using recipes shown in Table 3.

Using nitrate nitrogen denitrifying treatment materials of Examples 1 to 8 and Comparative Examples 1 to 3, nitrate nitrogen in water was removed. Added to each 200 ml plastic bottle were 100 ml of a solution of nitrate ion adjusted to 200 mg/l by potassium nitrate and 20 g (an amount without a carrier when the carrier was used) of one of the treatment materials shown in Tables. After deaeration by stirring, 0.1 g of pre-adjusted dry sludge with sulfur-oxidizing bacteria was added to the mixture and the whole was stirred well. The bottle was allowed to stand for 3 days in a thermostat at 25°C, and then a concentration of nitrate ion was determined by ion chromatography.

Recipes and results of denitrifying treatment are listed in Tables 1 to 3. In the tables, an amount mixed is shown in units of part by weight. Coating property means workability and strength (whether powder easily generates or not after drying) when coating slurry containing a sulfur powder on a surface of a carrier, and is indicated by a circle if excellent. Granulating property means a granulating property in the case of using no carrier, and is evaluated by the following standards.
Evaluation of granulating property: o; easy to produce. x1); Conventional heat-fusion method of sulfur with calcium carbonate with effort. A granule is hard but much powder is also produced. x2) ; Because of deficient binder, a large amount of powder is produced and granulating is impossible.

**Table 1**

| | Example | | | Comparative Example | | |
|---|---|---|---|---|---|---|
| | 1 | 2 | 3 | 1 | 2 | 3 |
| Sulfur | 35.0 | 48.0 | 48.0 | 50 | 49.97 | 30.0 |
| Calcium carbonate | 40.0 | 49.0 | 48.0 | 50 | 50.0 | 30.0 |
| Carrier: Non-woven fabric | | | Used | | | |
| XL4 | 25.0 | | | | | 40.0 |
| 1980NS | | 3.0 | 4.0 | | 0.03 | |
| NO₃⁻ after three days mg/l | 68 | 23 | 32 | 78 | 126 | 187 |
| Granulating property, Coating property | ○ | ○ | ○ | x1) | x2) | ○ |

**Table 2**

| | Example | | | | |
|---|---|---|---|---|---|
| | 4 | 5 | 6 | 7 | 8 |
| Sulfur | 27.0 | 45.0 | 33.0 | 25.0 | 40.0 |
| Calcium carbonate | 27.0 | 45.0 | 33.0 | 29.0 | 40.0 |
| Rock wool | 45.5 | 6.0 | 33.0 | | |
| Water granulated slag | | | | 45.0 | 18.0 |
| XL4 | 0.5 | 4.0 | | | |
| 1980NS | | | 1.0 | 6.0 | 2.0 |
| NO₃⁻ after three days mg/l | 18 | 23 | 12 | 38 | 54 |
| Granulating property | ○ | ○ | ○ | ○ | ○ |

**Table 3**

| | Comparative Example | | | |
|---|---|---|---|---|
| | 4 | 5 | 6 | 7 |
| Sulfur | 7.0 | 30.0 | 25.0 | 30.0 |
| Calcium carbonate | 8.0 | 30.0 | 25.0 | 30.0 |
| Rock wool | 80.0 | 39.98 | 15.0 | 39.98 |
| Water granulated slag | | | | |
| XL4 | 12.0 | 0.02 | | |
| 1980NS | | | 35.0 | 0.02 |
| NO₃⁻ after three days mg/l | 164 | 88 | 174 | 102 |
| Granulating property | ○ | x 2) | ○ | x 2) |

### Examples 9 to 17

In a 1000 ml glass beaker, to a predefined amount of rock wool, a binder adjusted to a predefined concentration by water or toluene was added in an amount such that the rock wool was thoroughly dampened. A mixture of a predefined amount of sulfur and a predefined amount of calcium carbonate was added to the dampened rock wool. The content in the beaker was stirred and mixed uniformly with a metal spatula manually. The beaker was allowed to stand for 24 hours in a thermostat at 60°C to remove the water or the organic solvent completely. A. mass of solidified treatment material was hammered lightly with a mallet to give a fractured product. For denitrifying treatment, a granular treatment material with a particle diameter of 5 to 20 mm was used.

Added to each 200 ml plastic bottle were 100 ml of a solution of nitrate ion adjusted to 200 mg/l by potassium nitrate and 20 g of one of the treatment materials obtained from the recipes shown in Tables 4 and 5. After deaeration by stirring, 0. 1 g of pre-adjusted dry sludge with sulfur-oxidizing bacteria was added to the mixture and the whole was stirred well. The bottle was placed in a thermostat at 25°C with being gently stirred for 3 days, followed by a denitrifying treatment. Then, a concentration of nitrate ion was determined by ion chromatography for the treated water. The results are listed in Tables 4 and 5.

**Table 4**

| Example | 9 | 10 | 11 | 12 | 13 | 14 |
|---|---|---|---|---|---|---|
| Sulfur | 30.0 | 45.0 | 15.0 | 40.0 | 35.0 | 40.0 |
| Calcium carbonate | 30.0 | 45.0 | 15.0 | 40.0 | 35.0 | 40.0 |
| Rock wool | 39.5 | 6.0 | 55.0 | 18.0 | | |
| Carbon fiber | | | | | 29.7 | 15.0 |
| XL4 | 0.5 | 4.0 | | | | |
| 1980NS | | | 15.0 | 2.0 | 0.3 | 5.0 |
| Bulk specific gravity | 0.32 | 0.53 | 0.31 | 0.51 | 0.37 | 0.48 |
| NO₃⁻ after three days mg/l | 18 | 43 | 32 | 22 | 12 | 28 |
| Granulating property | ○ | ○ | ○ | ○ | ○ | ○ |
| Fluidity of treatment material | ○ | ○ | ○ | ○ | ○ | ○ |

**Table 5**

| Example | 15 | 16 | 17 |
|---|---|---|---|
| Sulfur | 33.5 | 34.0 | 26.0 |
| Calcium carbonate | 33.0 | 34.0 | 26.0 |
| Rock wool | | 20.0 | 26.0 |
| Pearlite | 33.0 | 10.0 | 13.0 |
| Loess | | | 5.0 |
| 1980NS | 0.5 | 2.0 | 4.0 |
| Bulk specific gravity | 0.40 | 0.55 | 0.50 |
| NO₃⁻ after three days mg/l | 10 | 13 | 0 |
| Granulating property | ○ | ○ | ○ |
| Fluidity of treatment material | ○ | ○ | ○ |

### Comparative Examples 8 to 12

Recipes and evaluation results of Comparative Examples are listed in Table 6. In Table 6, Comparative Example 8 was obtained by the conventional heat-fusion method of sulfur instead of using an organic polymeric binder. Comparative Examples 9 to 12 were prepared in the same way as in Examples.

**Table 6**

| Comparative Example | 8 | 9 | 10 | 11 | 12 |
|---|---|---|---|---|---|
| Sulfur | 50 | 45 | 7 | 23 | 35 |
| Calcium carbonate | 50 | 50 | 8 | 24 | 35 |
| Rock wool | | 2 | 80.0 | | 29.95 |
| Carbon fiber | | | | 28.0 | |
| XL4 | | | | 25.0 | 0.05 |
| 1980NS | | 3.0 | 5.0 | | |
| Bulk specific gravity | 1.20 | 0.71 | 0.15 | 0.39 | 0.56 |
| NO₃⁻ after three days mg/1 | 158 | 144 | 38 | 174 | 87 |
| Granulating property | X¹⁾ | Δ | ○ | ○ | X²⁾ |
| Fluidity of treatment material | X¹⁾ | ○ | X¹⁾ | X²⁾ | X³⁾ |

### Evaluation of granulating property

O: easy to produce.
Δ: easy to produce, but much powder is also produced.
x: 1) conventional heat-fusion method of sulfur with calcium carbonate with effort. A granule is hard but much powder is also produced.
x: 2) Because of deficient binder, a large amount of powder is produced.

### Evaluation of fluidity

O: easy to flow
X: 1) does not flow
X: 2) much float in water
X: 3) gradually disintegrate to powder

### Example 18, Comparative Example 13

### (Non-woven fabric carriers coated with an SC material were arranged interspatially and treated water was circulated by water flow)

A denitrifying treatment material was made up from, in recipes shown in Table 7, sulfur (200 mesh, manufacturedbyKaruizawa Seiren) , calcium carbonate (T-200, manufactured by Nitchitsu Co., Ltd.), various carriers: non-woven fabric (PET fiber, manufactured by Toa Boshoku), and a binder (urethane resin) . Compositional percent of a binder was indicated as a solid content. For the urethane resin as a binder, a water-dispersing urethane resin (product name: 1980NS) , manufactured by Dainippon Ink and Chemicals Incorporated, was used.

In a 1000 ml glass beaker, predefined amounts of sulfur powder and calcium carbonate powder were mixed well. An organic binder adjusted to a predefined concentration by water was added to the mixture. The content in the beaker was stirred and mixed uniformly with a metal spatula to thoroughly dampen the entire mixed powders.
As a carrier, non-woven fabric was used. First, a carrier was thoroughly dampened with a predefined amount of organic binder adjusted to a predefined concentration by water. Second, powder mixture of a predefined amount of sulfur and a predefined amount of calcium carbonate was applied uniformly to the surface of the non-woven fabric carrier with a metal spatula. An amount of coating was 6 gby dryweight per 100 cm² of the non-woven fabric. The non-woven fabric was allowed to stand for 24 hours in a thermostat at 60°C to remove the water completely.

Using this denitrifying treatment material, nitrate nitrogen in water was removed. In a 300 ml beaker, 200 ml of a solution of nitrate ion adjusted to 200 mg/l by potassium nitrate was added, and eight non-woven fabrics (2.5 cm x 5 cm) coated with the treatment material (6 g without non-woven fabrics as carriers) were submerged vertically by hanging with thread without reaching the bottom of the beaker (see Fig. 7). 0.1 g of pre-adjusted dry sludge with sulfur-oxidizing bacteria was added to the beaker and the whole was stirred well. The beaker was allowed to stand for three days in a thermostat at 25°C. In the case of Example, during three-day standing, stirring for three minutes every hour was performed by a water flow generated by a magnetic stirrer under the treatment material (non-woven fabric supporting material). In the case of Comparative Example, there was no stirring during three-day standing. After three days, a concentration of nitrate ion was determined by ion chromatography.

The results are shown in Table 7. The method with stirring (Example) has advanced denitrification faster than the method with no stirring (Comparative Example) . Such a method is impossible for a massive treatment material produced by the conventional heat-fusion. When the concentration of nitrate ion was reduced to 3 mg/1 or less, the solution was discarded and another 200 ml of a solution of nitrate ion adjusted to 200 mg/l was added. The cycle of measuring, discarding, and re-adding was repeated in the same manner. The result was such that there was no water way, and high denitrifying performance was maintained, after 100 days.

**Table 7**

| | Example 18 | Comparative Example 13 |
|---|---|---|
| Sulfur | 48.0 | 48.0 |
| Calcium carbonate | 48.0 | 48.0 |
| Non-woven fabric | present | Present |
| 1980NS | 4.0 | 4.0 |
| Water way after 100 days | Not formed | Not formed |
| NO₃⁻ after three days mg/l | 7 | 96 |

### Example 19, Comparative Example 14

In each 500 ml beaker, 200 g of denitrifying treatment materials (one was obtained in the same way as in Example 2, and the other was obtained in the same way as in Comparative Example 1) and 300ml of a solution of nitrate ion adjusted to 880 mg/l by potassium nitrate were added, and then 1.0 g of pre-adjusted dry sludge with sulfur-oxidizing bacteria was added to the mixture and the whole was stirred well. The beaker was allowed to stand for ten days in a thermostat at 25°C. By this action, water treatment materials supporting sulfur-oxidizing bacteria were obtained, and were used as removing materials for simultaneous removal of nitrate nitrogen and phosphoric acid.
In other words, in a circulating treatment tank, 500 ml of a solution of nitrate ion (200 mg/l) and phosphate ion (100 mg/l) adjusted by potassium nitrate and sodium phosphate respectively was added, and the solution was treated with 200 g of the above water treatment material for 32 hours. Denitrifying performance and dephosphorizing performance were determined by measuring concentrations of nitrate ion and phosphate ion by ion chromatography.
In this case, circulation condition was as follows: using a pump at a rate of 600 ml/min.; and, circulating with intermittency at an interval of one minutes/ four hours.

The results are shown in Table 8.

**Table 8**

| | Example 19 | Comparative Example 14 |
|---|---|---|
| Sulfur | 48.0 | 50.0 |
| Calcium carbonate | 49.0 | 50.0 |
| Organic binder | 3.0 | - |
| Nitrate ion after three days mg/l | 2 | 73 |
| Phosphoric acid after three days mg/l | 32 | 81 |

From the results, it is obvious that the water treatment material using an organic binder not only has higher decomposing ability of nitrate nitrogen than that without organic binder, but also can treat a large amount of phosphoric acid simultaneously.

### Effects of the Invention

The nitrate nitrogen denitrifying treatment material of the present invention displays superior denitrifying ability, is easy to produce, and is excellent as a treatment material for denitrifying nitrate nitrogen in water by biological treatment by means of sulfur-oxidizing bacteria. Further, the denitrifying treatment material of the present invention has high denitrifying ability and, further, a small bulk specific gravity, so that the material is preferably applied to fluidized-bed. According to the method for denitrifying treatment of the present invention, in addition to an improvement in efficiency or rate of denitrification, dephosphorization can be performed simultaneously.

## Claims

1. A nitrate nitrogen denitrifying treatment material used for denitrifying nitrate nitrogen by biological treatment by means of sulfur-oxidizing bacteria, **characterized in that** said material is a granulated product having a particle size from 1 to 100 mm, and comprises a metal carbonate powder and a sulphur powder, which are mixed with 0.1 to 30 parts by weight of a water insoluble organic binder for integrating the powders with respect to 100 parts by weight of total of both the powders, said metal carbonate powder present in 30 to 70 parts by weight of the total weight of metal carbonate powder and sulphur powder, and said sulphur powder present in 70 to 30 parts by weight of the total weight of the metal carbonate powder and sulphur powder.

2. A nitrate nitrogen denitrifying treatment material according to claim 1, wherein the metal carbonate powder and the sulfur powder are integrated with the organic binder.

3. A nitrate nitrogen denitrifying treatment material according to claim 1 or claim 2, which further comprises 1 to 100 parts by weight of an inorganic additive with respect to 100 parts by weight of total of the metal carbonate powder and the sulfur powder.

4. A nitrate nitrogen denitrifying treatment material used for denitrifying nitrate nitrogen by biological treatment by means of sulfur-oxidizing bacteria according to claim 1, said material using a sulfur-carbonate system substrate, comprising a granule integrated with an organic polymeric binder which has a bulk specific gravity of 0.2 to 0.7.

5. A nitrate nitrogen denitrifying treatment material according to claim 4, **characterised in that** it comprises 0.1 to 20% by weight of the organic polymeric binder, 20 to 50% by weight of metal carbonate, 20 to 50% by weight of sulfur, and 5 to 65% by weight of at least one selected from the group consisting of a fibrous substance and a microporous substance.

6. A nitrate nitrogen denitrifying treatment material according to claim 5, wherein the fibrous substance comprises rock wool or carbon fiber.

7. A nitrate nitrogen denitrifying treatment material according to claim 5, wherein the microporous substance comprises pearlite, Shirasu-balloon or glass foam.

8. A nitrate nitrogen denitrifying treatment material according to claim 5, **characterised in that** it further comprises 1 to 20% by weight of iron oxide.

9. An apparatus for removing nitrate nitrogen in water, **characterised by** comprising a treatment tank which is equipped with a unit for fluidizing or suspending a nitrate nitrogen denitrifying treatment material in water, said tank comprising a nitrate nitrogen denitrifying treatment material according to any one of claims 4 to 8, a unit for introducing waste water containing nitrate nitrogen, and a unit for draining treated waste water.

10. An apparatus for removing nitrate nitrogen according to claim 9, wherein the unit for fluidizing or suspending the nitrate nitrogen denitrifying treatment material is at least one selected from the group consisting of: a unit for injecting a water flow or an air flow which causes an upward flow into the treatment tank; a unit for stirring or vibrating water in the treatment tank; and a unit for circulating a nitrate nitrogen denitrifying treatment material in the treatment tank with water.

11. A method of removing nitrate nitrogen in water, **characterised in that** it comprises performing a denitrifying treatment by contacting a.nitrate nitrogen denitrifying treatment material according to any one of claims 1 to 8 with water.

## Patentansprüche

1. Nitratstickstoffdenitrifikationsbehandlungsmaterial, das zur Denitrifikation von Nitratstickstoff durch biologische Behandlung mit Hilfe von schwefeloxidierenden Bakterien verwendet wird, **dadurch gekennzeichnet, dass** das Material ein granuliertes Produkt mit einer Teilchengröße von 1 bis 100 mm ist, und ein Metallcarbonatpulver und ein Schwefelpulver umfasst, welche mit 0,1 bis 30 Gewichtsteilen, bezogen auf 100 Gewichtsteile der Summe der beiden Pulver, eines wasserunlöslichen organischen Bindemittels zum Integrieren der Pulver gemischt sind, wobei das Metallcarbonatpulver zu 30 bis 70 Gewichtsteilen des Gesamtgewichts von Metallcarbonatpulver und Schwefelpulver vorhanden ist, und das Schwefelpulver zu 70 bis 30 Gewichtsteilen des Gesamtgewichts von Metallcarbonatpulver und Schwefelpulver vorhanden ist.

2. Nitratstickstoffdenitrifikationsbehandlungsmaterial gemäß Anspruch 1, wobei das Metallcarbonatpulver und das Schwefelpulver mit dem organischen Bindemittel integriert sind.

3. Nitratstickstoffdenitrifikationsbehandlungsmaterial gemäß Anspruch 1 oder Anspruch 2, welches weiterhin 1 bis 100 Gewichtsteile eines anorganischen Zusatzstoffes umfasst, bezogen auf 100 Gewichtsteile der Summe des Metallcarbonatpulvers und des Schwefelpulvers.

4. Nitratstickstoffdenitrifikationsbehandlungsmaterial, das zur Denitrifikation von Nitratstickstoff durch biologische Behandlung mit Hilfe von schwefeloxidierenden Bakterien verwendet wird gemäß Anspruch 1, wobei im Material ein Substrat auf Basis eines Schwefel-Carbonat-Systems verwendet wird, umfassend eine Granalie, die mit einem organischen polymeren Bindemittel mit einer spezifischen Schüttdichte von 0,2 bis 0,7 integriert ist.

5. Nitratstickstoffdenitrifikationsbehandlungsmaterial gemäß Anspruch 4, **dadurch gekennzeichnet, dass** es 0,1 bis 20 Gew.-% des organischen polymeren Bindemittels, 20 bis 50 Gew.-% Metallcarbonat, 20 bis 50 Gew.-% Schwefel und 5 bis 65 Gew.-% von mindestens einem aus der Gruppe der faserförmigen Stoffe und mikroporösen Stoffe umfasst.

6. Nitratstickstoffdenitrifikationsbehandlungsmaterial gemäß Anspruch 5, wobei das faserförmige Material Mineralwolle oder Kohlefasern umfasst.

7. Nitratstickstoffdenitrifikationsbehandlungsmaterial gemäß Anspruch 5, wobei der mikroporöse Stoff Perlit, Shirasu-Kügelchen oder Schaumglas umfasst.

8. Nitratstickstoffdenitrifikationsbehandlungsmaterial gemäß Anspruch 5, **dadurch gekennzeichnet, dass** es weiterhin 1 bis 20 Gew.-% Eisenoxid umfasst.

9. Gerät zum Entfernen von Nitratstickstoff in Wasser, **dadurch gekennzeichnet, dass** es einen Behandlungsbehälter umfasst, welcher mit einer Einheit zum Verwirbeln oder Suspendieren eines Nitratstickstoffdenitrifikationsbehandlungsmaterials in Wasser umfasst, wobei der Behälter ein Nitratstickstoffdenitrifikationsbehandlungsmaterial gemäß einem der Ansprüche 4 bis 8, eine Einheit zum Einbringen von Nitratstickstoff enthaltendem Abwasser und eine Einheit zum Ablassen des behandelten Abwassers umfasst.

10. Gerät zum Entfernen von Nitratstickstoff gemäß Anspruch 9, wobei die Einheit zum Verwirbeln oder Suspendieren des Nitratstickstoffdenitrifikationsbehandlungsmaterial mindestens eines ist, ausgewählt aus der Gruppe: eine Einheit zum Einspeisen eines Wasserstroms oder eines Luftstroms, was eine Aufwärtsströmung in den Behandlungstank bewirkt; eine Einheit zum Bewegen oder Vibrieren von Wasser in dem Behandlungstank; und eine Einheit zum Umwälzen eines Nitratstickstoffdenitrifikationsbehandlungsmaterials in dem Behandlungsbehälter mit Wasser.

11. Verfahren zum Entfernen von Nitratstickstoff in Wasser, **dadurch gekennzeichnet, dass** es das Durchführen einer Denitrifikationsbehandlung durch in Kontakt bringen eines Nitratstickstoffdenitrifikationsbehandlungsmaterials gemäß einem der Ansprüche 1 bis 8 mit Wasser umfasst.

## Revendications

1. Matériau pour le traitement de dénitrification de l'azote de nitrates utilisé pour dénitrifier l'azote de nitrate par un traitement biologique au moyen de bactéries sulfo-oxydantes, **caractérisé en ce que** ledit matériau est un produit granulé ayant une taille de particule de 1 à 100 mm, et comprend une poudre de carbonate métallique et une poudre de soufre, qui sont mélangées avec 0,1 à 30 parties en poids d'un liant organique insoluble dans l'eau pour intégrer les poudres, pour 100 parties en poids du total des deux poudres, ladite poudre de carbonate métallique étant présente à raison de 30 à 70 parties en poids du poids total de la poudre de carbonate métallique et de la poudre de soufre, et ladite poudre de soufre étant présente à raison de 70 à 30 parties en poids du poids total de la poudre de carbonate métallique et de la poudre de soufre.

2. Matériau pour le traitement de dénitrification de l'azote de nitrates selon la revendication 1, dans lequel la poutre de carbonate métallique et la poudre de soufre sont intégrées au liant organique.

3. Matériau pour le traitement de dénitrification de l'azote de nitrates selon la revendication 1 ou la revendication 2, qui comprend en outre 1 à 100 parties en poids d'un additif inorganique pour 100 parties en poids du total de la poudre de carbonate métallique et de la poudre de soufre.

4. Matériau pour le traitement de dénitrification de l'azote de nitrates utilisé pour dénitrifier l'azote de nitrates par un traitement biologique au moyen de bactéries sulfo-oxydantes selon la revendication 1, ledit matériau utilisant un substrat à système soufre-carbonate, comprenant des granules intégrées à un liant polymère organique qui a un poids spécifique apparent de 0,2 à 0,7.

5. Matériau pour le traitement de dénitrification de l'azote de nitrates selon la revendication 4, **caractérisé en ce qu'**il comprend 0,1 à 20 % en poids du liant polymère organique, 20 à 50 % en poids de carbonate métallique, 20 à 50 % en poids de soufre, et 5 à 65 % en poids d'au moins une substance choisie dans le groupe constitué d'une substance fibreuse et d'une substance microporeuse.

6. Matériau pour le traitement de dénitrification de l'azote de nitrates selon la revendication 5, dans lequel la substance fibreuse comprend de la laine de roche ou de la fibre de carbone.

7. Matériau pour le traitement de dénitrification de l'azote de nitrates selon la revendication 5, dans lequel la substance microporeuse comprend de la perlite, des ballons de Shirasu ou de la mousse de verre.

8. Matériau pour le traitement de dénitrification de l'azote de nitrates selon la revendication 5, **caractérisé en ce qu'**il comprend en outre 1 à 20 % en poids d'oxyde de fer.

9. Dispositif pour éliminer l'azote de nitrates dans l'eau, **caractérisé en ce qu'**il comprend un réservoir de traitement qui est équipé d'une unité pour fluidifier ou mettre en suspension un matériau pour le traitement de dénitrification de l'azote de nitrates dans l'eau, ledit réservoir contenant un matériau pour le traitement de dénitrification de l'azote de nitrates selon l'une quelconque des revendications 4 à 8, une unité pour introduire des eaux usées contenant de l'azote des nitrates, et une unité pour évacuer les eaux usées traitées.

10. Dispositif pour éliminer l'azote de nitrates selon la revendication 9, dans lequel l'unité pour fluidifier ou mettre en suspension le matériau pour le traitement de dénitrification de l'azote de nitrates est au moins une unité choisie dans le groupe constitué de : une unité pour injecter un courant d'eau ou un courant d'air qui entraîne un écoulement vers le haut dans le réservoir de traitement ; une unité pour agiter ou faire vibrer l'eau dans le réservoir de traitement ; et une unité pour amener en circulation un matériau pour le traitement de dénitrification de l'azote des nitrates dans le réservoir de traitement, avec de l'eau.

11. Procédé pour éliminer l'azote de nitrates dans l'eau, **caractérisé en ce qu'**il comprend la mise en oeuvre d'un traitement de dénitrification en amenant en contact avec l'eau, un matériau pour le traitement de dénitrification de l'azote de nitrates selon l'une quelconque des revendications 1 à 8.
